# EUROPEAN PATENT APPLICATION

(11) **EP 2 492 769 A1**
(43) Date of publication of application: **29.08.2012**
(21) Application number: 11155637.9
(22) Date of filing: 23.02.2011
(51) Int. Cl.: G05B 23/02

(54) **System and method for improved monitoring in an automation system**

(71) Applicant: SIEMENS AKTIENGESELLSCHAFT, 80333 München (DE)
(72) Inventor: Pateriya, Ashutosh, 560100, Bangalore (IN); V Oommen, Tom, 689532, Kerala (IN)

(57) **Abstract**

An automation system (100, 500, 600) includes multiple automation modules (102, 506, 606) and each automation module includes event buffer (104) for recording one or more event messages (200) corresponding to one or more events related to the respective automation module (102, 506, 606). The event messages (200) in the individual automation modules (102, 506, 606) are retrieved and aggregated in a diagnostic module (106, 508, 608). The one or more event messages (200) are provided to a user-interface device (400) for monitoring the automation system (100, 500, 600).

## Description

The present invention is related to system and a method for improved monitoring in an automation system.

Various industrial systems involve multiple workstations which perform multiple sequential operations in accordance with a pre-defined process flow. In order to automate these sequential operations, and consequently, the industrial system, an automation system, which generally includes a Programmable Logic Controller (PLC) or a Programmable Automation Controller (PAC), is used.

Broadly speaking, an automation system includes a set of automation modules namely, a central processing unit (CPU), a memory module storing programmable control logic, multiple input and output modules (collectively referred to as I/O modules), and multiple field devices connected to operation-executing entities. The multiple field devices include field input devices (for example, sensors) and field output devices (for example, actuators).

The automation system continuously monitors a state of the field input devices, processes the state of input devices to derive a desired state of the output devices in accordance with programmable control logic, and controls a state of the output devices in accordance with the desired state of the output devices.

In order to facilitate maintainability and scalability, an automation system generally has a modular architecture such that various components, such as CPU, I/O module, and so on, are designed as individual modules which are mountable on a rack assembly. Each I/O module mounted in the rack assembly is connected to one or more field devices through a field bus.

Such industrial systems controlled by an automation system may encounter certain fault conditions such as failure of a physical entity, for example, a sensor assembly, a data communication bus, and so on, an error in a logical entity for example, a program-code block included in the programmable control logic, corruption of data or control packets during transfer through a data communication bus. Such faults may lead to malfunction or, in more pronounced cases, a complete failure of the industrial system.

In various automation systems known in the art, the programmable control logic is designed to generate a fault message in the event of a fault condition. Each module, such as the CPU, the I/O module, and so on, maintains an event buffer for recording information related to various activities and events during its operation, including the fault messages generated in the event of a fault condition. In the scenario of a local or systemic fault, the information stored in the diagnostic buffer may be investigated to conduct a failure root-cause analysis. However, the fault root-cause analysis is significantly hindered by the fact each module independently maintains its event buffer without requisite correlation with the event buffers in other modules. Owing to the distributed nature of the event buffers, the operator has to separately investigate the event buffers in individual modules, manually identify a correlation between the events recorded in the individual modules, and eventually, draw out a conclusion with regard to the root cause of the fault. This process is quite tedious, time-intensive, and prone to errors. This, in turn, increases the industrial system downtime and leads to significant financial losses.

Moreover, in accordance with the state of the art, individual automation modules allocate limited memory for storing the event buffers. Hence, it is possible that when the event buffers are investigated, the event corresponding to the root cause has already been overwritten by more recent events in the corresponding module. In this case, the operator may not be able to identify the root cause of the fault at all.

In light of the foregoing, there is a need in the state of the art for a system and a method for improved monitoring in automation system such that it is possible to expedite the fault diagnosis and root-cause analysis.

The object of the present invention is to provide a system and a method for improved monitoring in an automation system.

The object of the present invention is achieved by a diagnostic module according to claim 1, an automation system according to claim 7, and a diagnostic method according to claim 12. Further embodiments of the present invention are addressed in the dependent claims.

The underlying idea of the present invention is to provide a diagnostic module for monitoring an automation system such that the diagnostic module is able to retrieve one or more event messages related to one or more events recorded in the event buffer of one or more automation modules in the automation system and aggregate the event messages. The aggregated event messages are accessible through a user-interface device which is communicatively connectable to any of the one or more communication ports provided in the diagnostic module. Therefore, in lieu of expending time and material resources on the tedious task of independently investigating the event buffers of the individual automation modules, a human operator is able to collectively monitor the aggregated event messages related to the events generated in multiple automation modules. This, in turn, facilitates expediting the fault diagnosis and root-cause analysis.

In accordance with an embodiment of the present invention, the diagnostic module includes an external memory interface for interfacing with an external memory module, wherein the external memory module is configured to aggregate the event information. This technical feature facilitates scaling up a cumulative storage capacity of the diagnostic module. Further, the external memory module may be physically removed from the diagnostic module and connected to another computational device at another location to enable transfer of the event messages from the diagnostic module to the computational device.

In accordance with another embodiment of the present invention, the event message includes at least one of a source identifier providing information related to the automation module generating the event, a time stamp providing information related to a time instant of generation of the event, and an event descriptor providing a description of the event. Owing to the availability of the source identifier, the time stamp, and the event descriptor, the event information related to the events may be chronologically sorted, and the source and the description of the event may be readily examined. Thus, this technical feature facilitates efficient monitoring of the automation system.

In accordance with another embodiment of the present invention, the diagnostic module is configured to assign a criticality index to each event such that the criticality index provides information related to an impact of the event on the automated system. This technical feature facilitates prioritization of the events based on the criticality index and hence, leads to efficient monitoring of the automation system.

In accordance with another embodiment of the present invention, the one or more communication ports include an Ethernet port for connecting to an Ethernet network such that the one or more events may be communicated to a first external monitoring system. This technical feature enables data communication between the diagnostic module and an external monitoring system through an Ethernet network.

In accordance with another embodiment of the present invention, the one or more communication ports include a Universal Serial Bus interface for connecting to a Universal Serial Bus such that the one or more events may be communicated to a second external monitoring system. This technical feature enables data communication between the diagnostic module and an external monitoring system through a Universal Serial Bus interface.

In accordance with another embodiment of the present invention, the automation system includes a user-interface device configured for displaying the one or more events stored in the diagnostic module. This technical feature facilitates display of aggregated event information to a human operator such that the fault diagnosis may be conducted in an efficient manner.

In accordance with another embodiment of the present invention, the user-interface device renders a user-activated icon for accessing the one or more events stored in the diagnostic module, wherein the user-activated icon triggers a first display mode corresponding to a first user-initiated action and a second display mode corresponding to a second user-initiated action. This technical feature facilitates monitoring the events in a desired display mode based on a requirement and/or a preference of a human operator.

In accordance with another embodiment of the present invention, the automation system includes at least one of means for generating a visual alarm and means for generating an auditory alarm based on an impact of the event on the automated system. This technical feature facilitates to alert a human operator regarding occurrence of a fault in the automation system.

In accordance with another embodiment of the present invention, the multiple automation modules and the diagnostic module are mountable on one or more rack assemblies such that the diagnostic module is communicatively coupled to each automation module mounted in the one or more rack assemblies. This technical feature facilitates scaling up the automation system through adding any desired number of modules in a combination of one main rack assembly and one or more extension rack assemblies.

The present invention is further described hereinafter with reference to illustrated embodiments shown in the accompanying drawings, in which:
- FIG 1: illustrates an automation system for automating a process,
- FIG 2: illustrates a schematic representation of an event message,
- FIG 3: illustrates a schematic representation of a diagnostic module,
- FIGS 4A-4C: illustrate a user-interface device, a first display mode corresponding to a first user-initiated action and a second display mode corresponding to a second user-initiated action respectively,
- FIG 5: illustrates a first schematic representation of a programmable logic controller,
- FIG 6: illustrates a second schematic representation of a programmable logic controller,
- FIG 7: illustrates a flow diagram corresponding to a diagnostic method for monitoring an automated system,

Various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

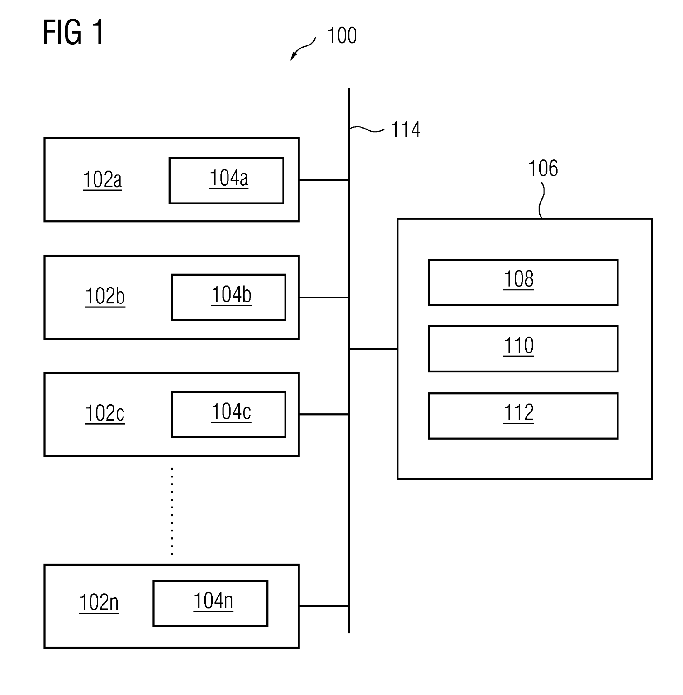

FIG 1 illustrates an automation system 100 for automating a process. The automation system 100 includes a plurality of automation modules such as automation module 102a, 102b, and so on, hereinafter individually referred to as the automation module 102 and collectively referred to as the automation modules 102, a diagnostic module 106, and a communication bus 114. Each automation module 102 includes an event buffer such as event buffers 104a, 104b, and so on, hereinafter individually referred to as the event buffer 104 and collectively referred to as the event buffers 104. The diagnostic module 106 includes a communication interface 108, an internal memory module 110, and one or more communication ports 112.

An automated process includes a plurality of operations; each operation is performed by one or more process entities (not shown in the figure). The automation modules 102 control the one or more process entities. Each automation module 102 maintains an event buffer 104 for recording one or more event messages corresponding to one or more events related to the automation module 102. The diagnostic module 106 retrieves and aggregates the one or more event messages from the event buffers 104. The diagnostic module 106 further provides an interface to connect a user-interface device for accessing the one or more event messages to monitor the automated system 100.

The automation modules 102 include a central processing unit (CPU), multiple input and output modules (collectively referred to as I/O modules), and multiple field devices connected to operation-executing entities. The functions of each of the aforementioned modules are well-known in the state of the art and hence, a detailed description of the same is not being provided for sake of brevity.

Each automation module 102 is configured to generate one or more event messages during operation. Such event messages may provide general information related to an operation of the automation module 102 and any other component to which the automation module 102 is connected. Alternatively, the event messages may provide information related to a fault condition in the automation module 102 and any other component to which the automation module 102 is connected. Such event messages are recorded in the event buffer 104 of the automation module 102.

It should be noted that the event buffer 104 may be a storage medium, included in a legacy automation module, where the event messages are stored. Alternatively, the event buffer 104 may be an output buffer where the event messages are temporarily stored before being transmitted to the diagnostic module 106.

The diagnostic module 106 is communicatively coupled to each automation module 102. The communication interface 108 retrieves the event messages from the event buffers 104 and aggregates the event messages in the internal memory module 110. The communication ports 112 provide one or more interface to connect a user-interface device for accessing the one or more event messages to monitor the automated system 100. Examples of communication ports include, but are not limited to, an Ethernet port, a Universal Serial Bus interface, and so on.

The communication of the event messages between the automation modules 102 and the diagnostic module 106 is performed through the communication bus 114.

It is imperative to mention that in various embodiments of the present invention, the transmission of event messages from the automation module 102 to the diagnostic module 106 may be initiated either by the automation module 102 or the diagnostic module 106.

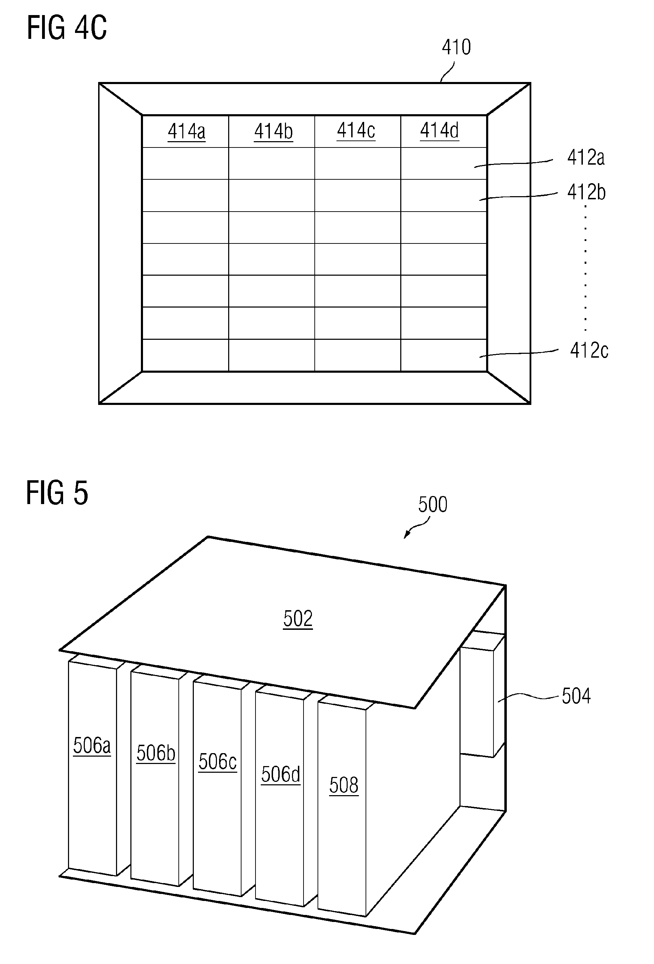

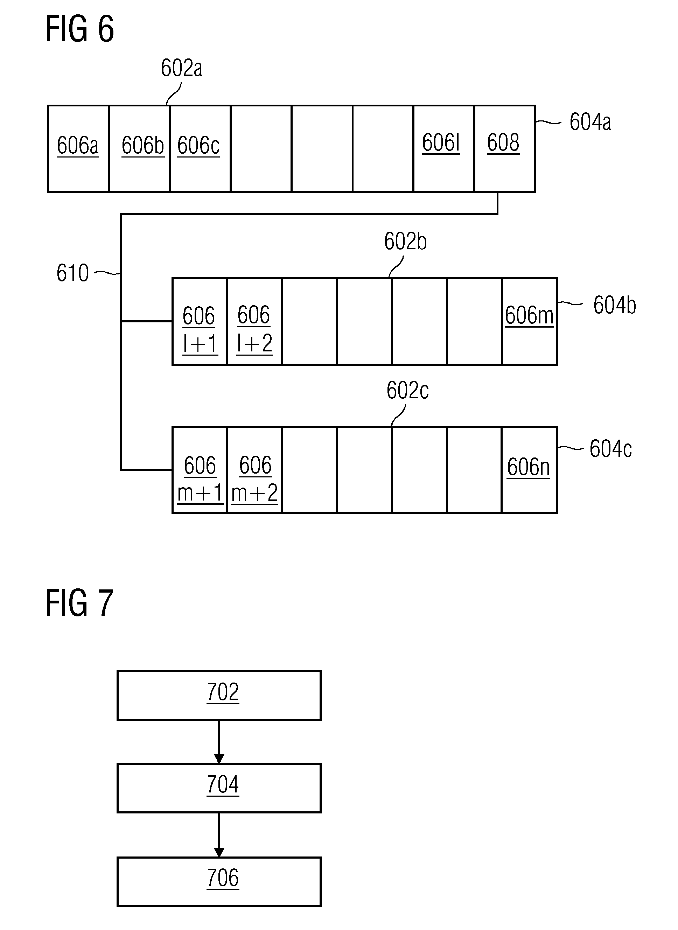

In accordance with an embodiment of the present invention, the automation system 100 has a modular architecture such that the automation modules 102 such as the CPU and the I/O modules and the diagnostic module 106 are mountable on a rack assembly. As is well known, the rack assembly provides a backplane for inter-module communication. The field devices are communicatively coupled to one or more modules mounted in the rack assembly through a field bus. Thus, the communication bus 114 is embodied in the backplane bus in case of modules mounted on the rack assembly and in a combination of the backplane bus and the field bus in case of field devices. In case, the automation modules 102 and the diagnostic module 106 require multiple rack assemblies, the communication bus 114 may be implemented through an extended backplane bus. Alternatively, the communication bus 114 is implemented as a combination of backplane bus for intra-rack communication and field bus for inter-rack communication. These aspects of the present invention will be further explained later in conjunction with FIGS 5 and 6.

In accordance with another embodiment of the present invention, the diagnostic module 106 may be directly connected to an automation module 102, such as central processing unit or communication processor, instead of mounting on a rack assembly such that the communication interface 108 connects to one automation module 102, for example, the central processing unit, the communication processor, and the like, in the automation system 100. The communication interface 108 retrieves the event messages in various modules of the automation system 100 through the automation module 102.

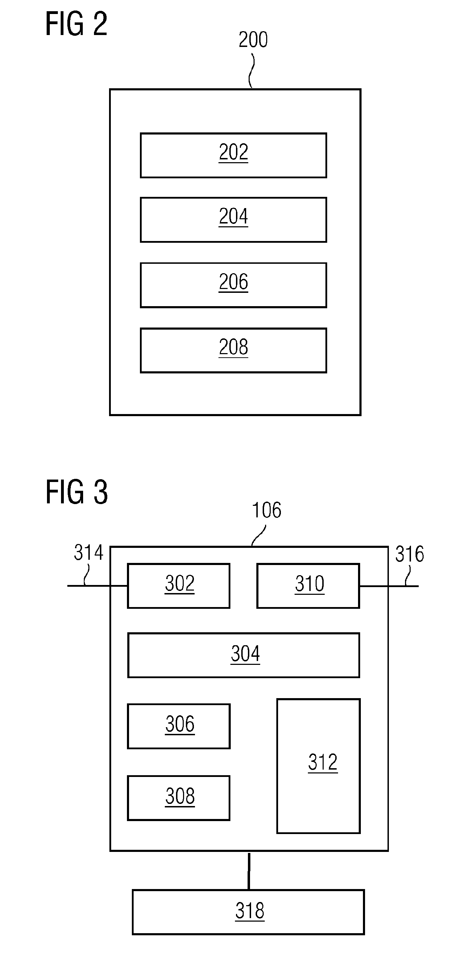

In accordance with another embodiment of the present invention, one or more automation modules 102 and/or the diagnostic module 106 are configured to generate a visual or an auditory alarm based on the information included in an event message. The automation modules 102 and/or the diagnostic module 106 may include one or more light-emitting diodes or any other suitable light producing device such that visual alarm is generated in a predefined manner or colour to indicate a fault condition. Further, the automation modules 102 and/or the diagnostic module 106 may also include sound-producing devices to generate a predefined sound to indicate a fault condition. This aspect of the present invention will be further explained later in conjunction with FIG 3.

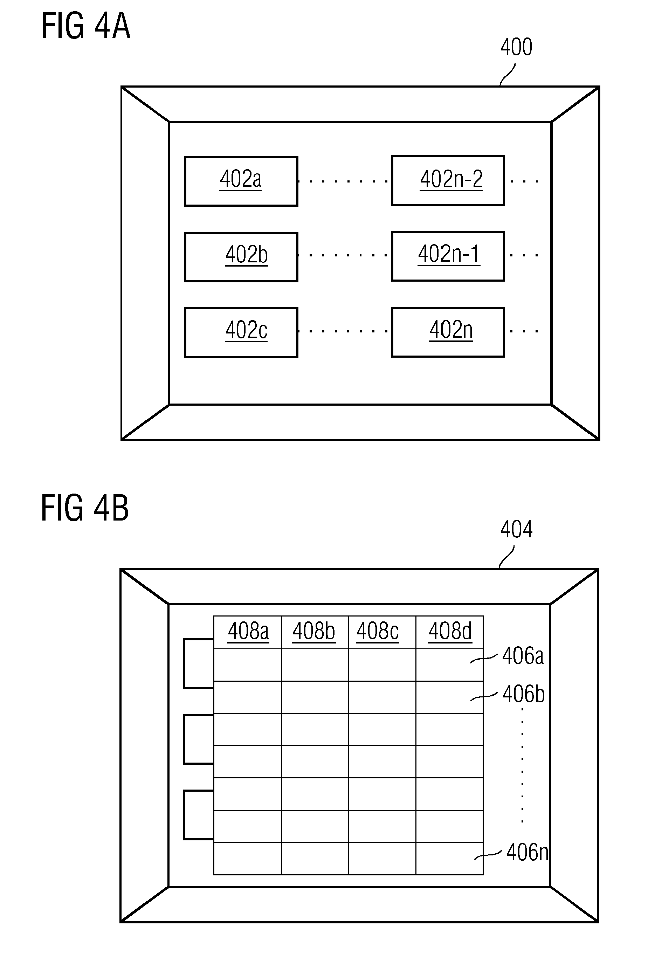

In accordance with another embodiment of the present invention, the automation system 100 includes a user-interface device configured for displaying the one or more event messages stored in the diagnostic module 106. This aspect of the present invention will be further explained later in conjunction with FIG 4.

FIG 2 illustrates a schematic representation of an event message 200. The event message 200 includes a plurality of data fields namely, a source identifier 202, a time stamp 204, an event descriptor 206, and a criticality index 208.

The source identifier 202 includes information related to the automation module 102 that generated the event. The time stamp 204 includes information related to a time instant of generation of the event. The event descriptor 206 includes a description of the event. The description may be in the form of an alphanumeric code selected from a predefined list of codes, a descriptive textual message, and so on. The criticality index 208 indicates an impact of the event on the automated system 100. For example, each event may be rated on a scale of 0 to 5 such that an event message 200 providing general information about an operation in the automation system is assigned a criticality index 0 whereas an event message 200 corresponding to a fault that will result in severe malfunction or process shutdown is assigned a criticality index 5.

In accordance with an embodiment of the present invention, the automation modules 102 are configured to generate the event messages 200 including the data fields mentioned above. Furthermore, the automation module 102 may be configured to generate such event messages that satisfy a predefined criterion. For example, the event messages 200 are generated only for such events that exceed a criticality index 2. Alternatively, as explained in conjunction with FIG 3, each event message retrieved from the automation module 102 is examined and if required, modified to comply with the format explained above. Furthermore, the diagnostic module 106 may be configured to store such event messages that satisfying a predefined criterion, for example, exceed a criticality index 2.

FIG 3 illustrates a schematic representation of the diagnostic module 106. The diagnostic module 106 includes a communication interface 302, a controller 304, an internal memory module 306, an external memory interface 308, one or more communication ports 310, and an alarm generator 312. The communication interface 302 is connectable to a communication bus 314 and the communication ports 310 are connectable to a communication network 316. FIG 3 also depicts an external memory module 318 which is connectable to the diagnostic module 106 through the external memory interface 308.

The external memory interface 308 provides for connecting the external memory module 318 to the diagnostic module 106. The external memory module 318 is configured to store the event messages. Thus, the cumulative memory of the diagnostic module 106 may be scaled up as required.

The communication interface 302 is similar to the communication interface 108 and retrieves the event messages from the event buffers 104 through the communication bus 314, which is similar to the communication bus 114.

The communication interface 302 provides the event messages to the controller 304. The controller 304 verifies a format of each event message. In case the event message is not in accordance with a predefined format as described in conjunction with FIG 2, the controller 304 processes the event message such that the event message is compliant with the predefined format. Further, the controller 304 assigns a criticality index to each event message. Subsequently, the event messages are stored in one of the internal memory module 306 and the external memory module 318.

The communication ports 310, which are similar to the communication ports 112, provide an interface to connect a user-interface device through the communication network 316 for accessing the one or more event messages to monitor the automated system 100. Examples of communication ports 310 include, but are not limited to, an Ethernet port, a Universal Serial Bus (USB) interface, and so on. Thus, the communication network 316 may be an Ethernet network, a Universal Serial Bus, and so on.

The Ethernet port facilitates connecting the diagnostic module 106 to a first external monitoring system such as a remote computing system through an Ethernet network. Similarly, the USB interface facilitates connecting the diagnostic module 106 to a second monitoring system such as a handheld device that supports USB interface to retrieve and monitor the event messages stored in the diagnostic module 106.

In an embodiment of the present invention, the diagnostic module 106 is configured to initiate transfer of the event messages to the remote computing system based on a pre-defined criterion. For example, in case of a fault condition, an event message is transmitted to the remote computing system or a handheld device such that a human operator is actively informed regarding the occurrence of the fault in the automation system 100.

In an alternative embodiment of the present invention, the communication ports 310 provide an interface to the communication bus 314 such that the event messages are retrievable through a communication port implemented in one of the automation modules 102.

The controller 304 may trigger the alarm generator 312 to generate a visual or an auditory alarm based on the information included in an event message. The alarm generator 312 may include one or more light-emitting diodes or any other suitable light producing device such that the alarm generator 312 produces light in a predefined manner or colour to indicate a fault condition. Further, the alarm generator 312 may also include sound-producing devices to generate a predefined sound to indicate a fault condition.

In accordance with another embodiment of the present invention, the diagnostic module 106 is provided as a rack-assembly mountable module that has a three-way switch for setting the diagnostic module into the three states, namely, ON state, OFF state, and RESET state. Thus, the diagnostic module 106 may be switched-on and switched-off through setting the three-way switch in the ON state and OFF state respectively. In case it is required to remove the event messages stored in the diagnostic module 106 from a previous run, the three-way switch may be set to RESET state whereby the internal memory module and optionally, the external memory module are formatted to remove any data stored therein.

Furthermore, the diagnostic module 106 may be provided with a set of light-emitting diodes to indicate the state of operation of the diagnostic module 106. For example, the diagnostic module 106 may have one or more light-emitting diodes configured for indicating states of stop, normal run, memory read-write, and memory reset operations.

FIGS 4A-4C illustrate a user-interface device 400, a first display mode 404 corresponding to a first user-initiated action and a second display mode 410 corresponding to a second user-initiated action respectively.

The user-interface device 400 provide a display screen in accordance with any suitable display technology, including but not limited to, CRT, LCD, plasma, and so on. Further, the user-interface device 400 may implement any suitable input means including but not limited to, a mouse, a keypad, a touch-sensitive surface, and so on.

The user-interface 400 is configured to display one or more icons 402 such that each icon 402 is representative of a module included in the automation system 100 such as the automation module 102, the diagnostic module 106, and so on. In the exemplary embodiment shown in FIG 4, the icon 402b represents the diagnostic module 106.

A human operator can initiate at least two distinct actions while interacting with icon 402b, for example, when the user hovers the cursor of a mouse over icon 402b, it is interpreted as the first user-initiated action; similarly, when the user effects a single click, it is interpreted as a second user-initiated action. As will be apparent to a person ordinarily skilled in the art, the human operator can initiate several possible actions while interacting with the user-interface 400, any two of these possible actions may be selected and configured as the first user-initiated action and the second user-initiated action respectively.

When the human operator initiates the first user-initiated action, the first display mode 404 is activated. In the exemplary embodiment shown in FIG 4, the first display mode 404 is a floating window that appears as long as the cursor of the mouse hovers over the icon 402b. The first display mode 404 includes a pre-defined number of most recent event messages which are continually updated in accordance with a first-in-first-out scheme. Each event message is displayed in a row such as row 406a, 406b, and so on. Each row 406 is partitioned into one or more columns such as 408a, 408b, and so on. The individual columns include information related to one of a source identifier, a time stamp, an event descriptor, a criticality index, and so on.

Similarly, when the human operator initiates the second user-initiated action, the second display mode 410 is activated. In the exemplary embodiment shown in FIG 4, the second display mode 410 is a full-screen window. The second display mode 410 includes all the event messages stored in the diagnostic module 106. Each event message is displayed in a row such as row 412a, 412b, and so on. Each row 412 is partitioned into one or more columns such as 414a, 414b, and so on. The individual columns include information related to one of a source identifier, a time stamp, an event descriptor, a criticality index, and so on. As only a limited number of event messages may be displayed in the user-interface even when operating in the second display mode, a user-control is also provided such that the human operator is able to view the event messages that are not shown in the first screen, for example, a scroll option, or a soft-button to navigate to next set of event messages.

Thus, the human operator is able to view the entire set of event messages corresponding to the one or more events that are generated in the automation system 100.

In various exemplary embodiments of the present invention, the user-interface device 400 may be implemented as an integrated display in the diagnostic module, a hand-held device, a remote computational device, and the like, connectable to the diagnostic module 106 through the communication interface 108 or the communication port 112.

In accordance with another embodiment of the present invention, the user-interface device 400 is configured to generate a visual or an auditory alarm based on the information included in an event message, for example the criticality index exceeding a value of 2, and so on. The visual alarm may be implemented such that a row corresponding to an event message with a pre-defined criticality index is highlighted in a predefined colour to indicate a fault condition. The user-interface device 400 may be configured to display the event messages with different criticality indices in different colours according to a predefined criterion. Further, the user-interface device 400 may also include sound-producing devices to generate a predefined sound to indicate a fault condition.

FIG 5 illustrates a first schematic representation of a programmable logic controller 500. The programmable logic controller 500 includes a rack assembly 502, a backplane bus 504, and automation modules 506a, 506b, and so on, and a diagnostic module 508.

As explained in conjunction with FIG 1, in accordance with an embodiment of the present invention, the automation system 100 is implemented as programmable logic controller 500 based on a modular architecture.

The automation modules 506 such as the CPU and the I/O modules and the diagnostic module 508 are mounted as on the rack assembly 502. The backplane bus 504 provides the communication bus for inter-module communication.

FIG 6 illustrates a second schematic representation of a programmable logic controller 600. The programmable logic controller 600 includes rack assemblies 602a, 602b, and 602c, the rack assemblies including backplane bus 604a, 604b, and 604c respectively and automation modules 606a, 606b, and so on, a diagnostic module 608, and an inter-rack communication bus 610.

As known in the art, in case the number of the automation modules 606 is more than the number of slots in a single rack assembly, multiple rack assemblies are used.

The rack assembly 602a is referred to as the main rack and the remaining rack assemblies such as 602b and 602c are referred to as extension racks.

The automation modules 606a to 6061 such as a central processing unit, a communication processor, selected I/O modules and the diagnostic module 608 are mounted on the rack assembly 602a. The remaining automation modules 606m to 606n are mounted on rack assemblies 602b and 602c.

The backplane bus 604a provide the communication bus for intra-rack communication between the diagnostic modules 608 and the automation modules 606 mounted on rack assembly 602a. The communication between the diagnostic modules 608 and the automation modules 606 mounted on rack assembly 602b and 606c is implemented through the inter-rack communication bus 610, which may be an extended backplane bus or a field bus for inter-rack communication.

FIG 7 illustrates a flow diagram corresponding to a diagnostic method for monitoring an automated system.

As explained earlier in conjunction with FIG 1, the automation system comprises a plurality of automation modules. The automation modules include event buffers for recording one or more event messages corresponding to one or more events related to the respective automation module. Such event messages are retrieved from the event buffers.

At step 702, the one or more event messages recorded in the event buffer of at least one automation module in the automation system are retrieved.

At step 704, the one or more event messages are aggregated in a memory module.

At step 706, the one or more event messages are provided to a user-interface device for monitoring the automation system.

Thus, the present invention provides an improved system and method for monitoring an automated system.

As the diagnostic information in the event messages related to the automation system is aggregated in the diagnostic module, the human operator is relieved from the tedious task of independently investigating the event buffers of the individual automation modules. The human operator can easily sort the event messages in accordance with a desired criterion, for example, chronologically, to investigate the root-cause of a fault in the automation system. Thus, the time required for fault root-cause analysis is significantly reduced.

As the diagnostic module can be configured to store significantly greater number of event messages compared to the capacity of the event buffers in the automation modules, the possibility of overwriting an event message corresponding to the root cause by more recent events, is eliminated.

In addition, the present invention provides for actively reporting various events occurring in the automation system to a human operator through use of various display modes as well as visual and auditory alarm signals such that the automation system is efficiently monitored.

Furthermore, the present invention facilitates to relieve the automation modules from processing overheads related to diagnostic activities. The automation modules communicate the generated events to the diagnostic module and subsequent diagnostic procedures are conducted in the diagnostic module instead of the automation module. Hence, the overall efficiency of the automation modules is also improved.

While the present invention has been described in detail with reference to certain embodiments, it should be appreciated that the present invention is not limited to those embodiments. In view of the present disclosure, many modifications and variations would present themselves, to those of skill in the art without departing from the scope and spirit of this invention. The scope of the present invention is, therefore, indicated by the following claims rather than by the foregoing description. All changes, modifications, and variations coming within the meaning and range of equivalency of the claims are to be considered within their scope.

## Claims

1. A diagnostic module (106, 508, 608) for monitoring an automation system (100, 500, 600), wherein the automation system (100, 500, 600) comprises a plurality of automation modules (102, 506, 606) comprising event buffers (104) for recording one or more event messages (200) corresponding to one or more events related to the respective automation module (102, 506, 606), the diagnostic module (106, 508, 608) comprising:
- a communication interface (108, 302) for retrieving the one or more event messages (200) recorded in the event buffer (104) of at least one automation module (102, 506, 606),
- an internal memory module (110, 306) for aggregating the one or more event messages (200), and
- one or more communication ports (112, 310) for providing the one or more event messages (200) to a user-interface device (400) for monitoring the automation system (100, 500, 600).

2. The diagnostic module (106, 508, 608) according to claim 1 further comprising an external memory interface (308) for interfacing with an external memory module (318), wherein the external memory module (318) is configured to aggregate the one or more event messages (200).

3. The diagnostic module (106, 508, 608) according to claim 1 or 2, wherein each event message (200) comprises at least one of:
- a source identifier (202) providing information related to the automation module (102, 506, 606) generating the event,
- a time stamp (204) providing information related to a time instant of generation of the event, and
- an event descriptor (206) providing a description of the event.

4. The diagnostic module (106, 508, 608) according to any of claims 1 to 3, wherein the diagnostic module (106, 508, 608) is configured to assign a criticality index (208) to each event message (200), wherein the criticality index (208) is indicative of an impact of the event on the automated system 100.

5. The diagnostic module (106, 508, 608) according to any of claims 1 to 4, wherein the one or more communication ports (112, 310) comprise an Ethernet port for connecting to an Ethernet network (316) such that the one or more event messages (200) may be communicated to a first external monitoring system.

6. The diagnostic module (106, 508, 608) according to any of claims 1 to 5, wherein the one or more communication ports (112, 310) comprise a Universal Serial Bus interface for connecting to a Universal Serial Bus (316) such that the one or more event messages (200) may be communicated to a second external monitoring system.

7. An automation system (100, 500, 600) for automating a process, the automation system (100, 500, 600) comprising:
- a plurality of automation modules (102, 506, 606) comprising an event buffer (104) for recording one or more event messages (200) corresponding to one or more events related to the respective automation module (102, 506, 606), and
- at least one diagnostic module (106, 508, 608) for monitoring the one or more event messages (200) generated in at least one automation module (102, 506, 606) in accordance with claims 1 to 6.

8. The automation system (100, 500, 600) according to claim 7, wherein the automation system (100, 500, 600) further comprises a user-interface device (400) configured for displaying the one or more event messages (200) stored in the diagnostic module (106, 508, 608).

9. The automation system (100, 500, 600) according to claim 8, wherein the user-interface device (400) renders a user-activated icon (402) for accessing the one or more event messages (200) stored in the diagnostic module (106, 508, 608), wherein the user-activated icon (402) triggers a first display mode (404) corresponding to a first user-initiated action and a second display mode (410) corresponding to a second user-initiated action.

10. The automation system (100, 500, 600) according to any of claims 7 to 9, wherein the automation system (100, 500, 600) comprises at least one of means for generating a visual alarm and means for generating an auditory alarm based on an impact of the event on the process.

11. The automation system (100, 500, 600) according to any of claims 7 to 10, wherein each of the plurality of automation modules (102, 506, 606) and the at least one diagnostic module (106, 508, 608) are mountable on one or more rack assemblies (502, 602) such that the at least one diagnostic module (106, 508, 608) is communicatively coupled to each automation module (102, 506, 606).

12. A diagnostic method for monitoring an automation system (100, 500, 600), wherein the automation system (100, 500, 600) comprises a plurality of automation modules (102, 506, 606) comprising event buffers (104) for recording one or more event messages (200) corresponding to one or more events related to the respective automation module (102, 506, 606), wherein the method comprising:
- retrieving (702) the one or more event messages (200) recorded in the event buffer (104) of at least one automation module,
- aggregating (704) the one or more event messages (200), and
- providing (706) the one or more event messages (200) to a user-interface device (400) for monitoring the automation system (100, 500, 600).

13. The diagnostic method according to claim 12, wherein each event message (200) comprises at least one of:
- a source identifier (202) providing information related to the automation module (102, 506, 606) generating the event,
- a time stamp (204) providing information related to a time instant of generation of the event, and
- an event descriptor (206) providing a description of the event.

14. The diagnostic method according to claims 12 or 13 further comprising assigning a criticality index (208) to each event message (200), wherein the criticality index (208) provides information related to an impact of the event on the automation system (100, 500, 600).
